# EUROPÄISCHE PATENTSCHRIFT

(11) **EP 0 609 729 B1**
(45) Veröffentlichungstag und Bekanntmachung des Hinweises auf die Patenterteilung: **02.12.1998**
(21) Anmeldenummer: 94100916.9
(22) Anmeldetag: 22.01.1994
(51) Int. Cl.: E01B 1/00

(54) **Elastische Schotterbettunterlage**
Elastic ballast way support
Support de voie de ballast élastique

(30) Priorität: 28.01.1993 DE 4302299
(43) Veröffentlichungstag der Anmeldung: 10.08.1994
(73) Patentinhaber: SAAR-GUMMIWERK GmbH, 66687 Wadern-Büschfeld (DE)
(72) Erfinder: Ihle, Erich, Dr., D-66687 Wadern (DE); Völker, Heinz, D-66687 Wadern (DE)

(56) Entgegenhaltungen:
- EP-A- 0 086 620
- EP-A- 0 167 844
- EP-A- 0 301 622
- EP-A- 0 467 863
- DE-A- 4 017 566
- GB-A- 2 003 962

## Beschreibung

Die Erfindung betrifft eine elastische, matten- bzw. bahnenförmige, Schlotterbettunterlage aus im Kernbereich geschlossenenzellig geschäumtem Elastomerwerkstoff zur Körperschalldämmung zwischen Schotterbett und betoniertem Untergrund der Gleisanlage.

Elastische Schotterbettunterlagen werden insbesondere bei auf betoniertem Untergrund verlegten Gleisen, z. B. bei Tunnel- und Brückenbauwerken eingesetzt zur Körperschalldämmung, zum Schutz von schwingungsempfindlichen Bauwerken, zur Erhöhung der Gleisstabilität sowie zur Verminderung der Schotterpressung. Es sind bereits ein- oder mehrlagige Schotterbettunterlagen aus mikrozellulärem Elastomerwerkstoff aus der Schwellen- und Schienenunterlage der FR-A-2 511 405 als Stand der Technik fachmännisch ableitbar.
In der EP-A-0086 620 wird eine Polymer-Komposition sowie ein Verfahren zur Herstellung von geschäumten Artikeln aus dieser aus einem thermoplastischen Olefinepolymer und einem elastomeren Ethylen/Propylen-Copolymer unter Zusatz von Schäumwirkstoff gebildeten thermoplastischen Elastomer (TPO) angegeben. Das Ergebnis ist ein Polymer-Zweiphasenwerkstoff mit gummiartigem Deformationsverhalten, der aber nach wie vor thermoplastische Verarbeitungseigenschaften aufweist. Ein für technische Formteile und die Automobilindustrie hervorragender, teurer Werkstoff. Für den vorgesehenen Verwendungsbereich als Schotterbettunterlage stützt man sich weiterhin auf kostengünstige, herkömmliche Polyurethanschäume. Die Federkennlinie dieser ein- oder mehrlagigen Unterlagen ist durch das Verhältnis von offenen zu geschlossenen Zellen bestimmt. Nachteilig bei diesen Unterlagen ist, daß der scharfkantige Schotter in kurzer Zeit in die Unterlage eindringen und diese zerstören kann. Bei Beschädigung der Unterlage kann Wasser oder Schmutz in die offenporigen Zellen eindringen. Dies führt zu einer wesentlichen Veränderung der Federkennlinie.

Auch sind Schotterbettunterlagen aus ungeschäumten, kompakten Gummibahnen bekannt. Zur Einstellung der Elastizität weisen die Unterlagen runde oder rautenartige Löcher oder aber auch geometrische Hohlräume, beispielsweise zwischen den einzelnen Lagen der Unterlage auf. Bedingt durch die bei Belastung von kompaktem Werkstoff aufzunehmende Walkarbeit können diese Unterlagen im Laufe der Zeit zerstört werden.

Aufgabe der vorliegenden Erfindung ist es, eine elastische Schotterbettunterlage zur Körperschalldämmung kostengünstig bereitzustellen, die die vorgenannten Nachteile vermeidet.

Diese Aufgabe wird bei einer Schotterbettunterlage der eingangs genannten Art dadurch gelöst, daß die Schotterbettunterlage aus geschossenzellig geschäumtem, vernetztem EPDM-Kautschuk hergestellt ist.

Der gewünschte Bettungsmodul der Schotterbettunterlage wird dabei durch den Schäumgrad der Schotterbettunterlage eingestellt. Bei der Schaumstruktur sind je nach der Dichte der Schotterbettunterlage größere oder kleinere Poren vorhanden. Da diese geschossenzellig sind, kann - auch bei einer Beschädigung der Oberfläche der Schotterbettunterlage - Wasser oder Schmutz nicht eindringen, so daß die dynamischen Eigenschaften der Schotterbettunterlage nicht verändert werden.

Zur Verhinderung des Eindringes von scharfkantigem Schotter und auch zur besseren Lastverteilung ist es vorteilhaft, zumindest die Oberseite der Schotterbettunterlage mit einer Schutzschicht aus kompaktem, dauerdruckfestem EPDM-Kautschuk zu versehen. Die Dicke der Schutzschicht kann bis zu 5 mm betragen.

Zweckmäßigerweise beträgt sie 2 mm. Die Schutzschicht kann mit dem geschäumten Kernbereich der Schotterbettunterlage verklebt, verschweißt oder auch aufvulkanisiert sein.

Zusätzlich kann die Schutzschicht ihrerseits mit einem textilen Gewebe laminiert sein. Die Flächendichte dieses textilen Gewebes beträgt zweckmäßigerweise ca. 300 g/m², kann aber auch bis zu 600 g/m² betragen.

Bei rauhem unebenem Untergrund, was bei betonierten Böden die Regel ist, ist es zweckmäßig, auch die Unterseite der Schotterbettunterlage mit einer Schutzschicht zu versehen. Erforderlichenfalls auch mit einer textilgewebe-verstärkten Schutzschicht.

Gegenüber den bekannten ein- oder mehrlagigen Schotterbettunterlagen aus geschäumtem Kunststoff hat die erfindungsgemäße Schotterbettunterlage die Vorteile:
- infolge der geschlossenzelligen Schaumstruktur bei einlagiger Ausführung, keine Veränderung der Federkennlinie durch Eindringen von Wasser und Schmutz;
- bei dem verwendeten Werkstoff EPDM-Kautschuk ist die kompakte Schutzschicht mit dem geschäumten Kernbereich verschweiß- oder vulkanisierbar. Ebenso sind die Kanten miteinander verschweiß- oder vulkanisierbar.

Gegenüber Schotterbettunterlagen aus nichtgeschäumtem, kompaktem Werkstoff mit geometrischen Hohlräumen weist die erfindungsgemäße Schotterbettunterlage eine wesentlich längere Lebensdauer auf, da infolge der Schaumstruktur keine Walkarbeit auftritt.

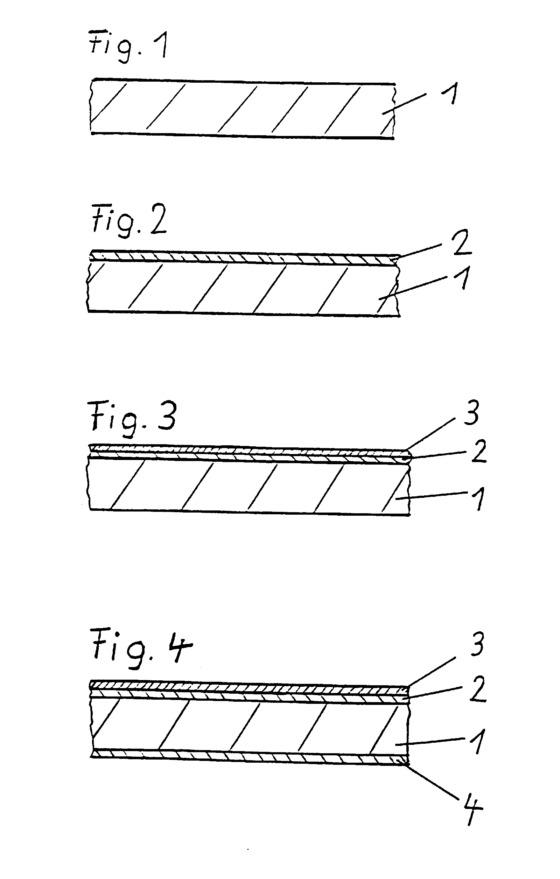

In den Fig. 1 bis 4 sind mögliche Ausführungsformen der erfinungsgemäßen Schotterbettunterlage dargestellt.

Fig. 1 zeigt einen Querschnitt durch eine einlagige geschlossenzellig geschäumte, vernetzte Schotterbettunterlage 1.

Fig. 2 zeigt eine Schotterbettunterlage 1 mit einer auf ihrer Oberseite aufgebrachten Schutzschicht 2 aus nicht geschäumtem EPDM-Kautschuk.

Fig. 3 zeigt eine Schotterbettunterlage 1 gemäß Fig. 2 mit einer zusätzlichen Kaschierung durch ein textiles Gewebe 3 über der kompakten Schutzschicht.

Fig. 4 schließlich zeigt eine Schotterbettunterlage 1 gemäß Fig. 3, bei der auch auf der Unterseite eine Schutzschicht für rauhe unebene Böden angebracht ist.

## Patentansprüche

1. Elastische, matten- bzw. bahnenförmige Schotterbettunterlage aus im Kernbereich geschlossenzellig geschäumtem Elastomerwerkstoff zur Körperschalldämmung zwischen Schotterbett und betoniertem Untergrund von Gleisanlagen,
**dadurch gekennzeichnet,**
daß die Schotterbettunterlage (1) aus vernetztem EPDM-Kautschuk (Ethylen-Propylen-Dien-Terpolymer) besteht.

2. Schotterbettunterlage nach Anspruch 1,
**dadurch gekennzeichnet,**
daß die Schotterbettunterlage auf ihrer Oberseite und ggf. Unterseite eine Schutzschicht aufweist, und daß der oder beiden Schutzschichten (2) des Kernbereiches ein textiles Gewebe (3) mit einem Flächengewicht bis zu 600 g/m² auf- oder einlaminiert ist.

## Claims

1. Elastic ballast bed underlay in mat or strip form made of foamed elastomer material with closed cells in the core area for deadening structure-borne sound between the ballast bed and the concreted foundation of track installations, characterised in that the ballast bed underlay (1) is made of cross-linked EPDM rubber (ethylene propylene diene terpolymer).

2. Ballast bed underlay according to claim 1,
characterised in that on its upper side and possibly its underside the ballast bed underlay exhibits a protective layer, and in that a textile fabric (3) with a specific weight of up to 600 g/m² is laminated on or in the one or two protective layers (2) of the core area.

## Revendications

1. Base de lit de pierraille ou ballast souple, en forme de paillasson ou de voie en une matière en élastomère en mousse à cellules fermées dans la zone centrale, destinée à amortir le bruit d'impact entre le lit de pierraille et le substrat bétonné de voies ferrées,
caractérisée en ce que
la base de lit de pierraille (1) se compose de caoutchouc EPDM réticulé (terpolymère éthylène-propylène, dienne).

2. Base de bit de pierraille selon la revendication 1,
caractérisée en ce que
la base de bit de pierraille comporte sur sa face supérieure et éventuellement sa face inférieure une couche de protection et sur la ou les deux couches de protection (2) de la zone centrale est appliqué un tissu textile (3) ayant une densité superficielle allant jusqu'à 600 g/m².
